Europäisches Patentamt

European Patent Office

Office européen des brevets

(11) Publication number: 0 429 387 A2

# EUROPEAN PATENT APPLICATION

(21) Application number: 90480115.6

(22) Date of filing: 10.08.90

(51) Int. Cl.⁵: G06K 15/00

(30) Priority: 20.10.89 US 424848

(43) Date of publication of application:
29.05.91 Bulletin 91/22

(84) Designated Contracting States:
BE CH DE ES FR GB IT LI NL SE

(71) Applicant: International Business Machines
Corporation
Old Orchard Road
Armonk, N.Y. 10504(US)

(72) Inventor: Doll, Deborah Therasa
801 Hayden Court
Longmont, Colorado 80503(US)
Inventor: Hofmeister, James Pierson
4651 Paseo Presidio
Tucson, Arizona 85715(US)
Inventor: Stone, David Earl
1121 Princeton Drive
Longmont, Colorado 80501(US)
Inventor: Strietzel, Arlen Vincent
7295 Timothy Place
Longmont, Colorado 80501(US)

(74) Representative: Bonin, Jean-Jacques
Compagnie IBM France Département de
Propriété Intellectuelle
F-06610 La Gaude(FR)

(54) Nonsubvertible security displays especially for page printers.

(57) Display system having security features that prevent a casual user from modifying or interfering with the printing of security information. The system is arranged to have two display areas, one fitting the size of the display medium and the other, usually smaller and located within the first, where information can be displayed without restriction.

The information outside the inner area can only be displayed in conformance with a protocol requiring a special authorization. Thus, anyting displayed outside the inner area cannot be cancelled or overwritten.

One protocol is the use of security overlays.

FIG.1

# NONSUBVERTIBLE SECURITY DISPLAYS ESPECIALLY FOR PAGE PRINTERS

Documents Incorporated by Reference

U.S. patent 4,651,278 assigned to a common assignee is hereby incorporated by reference.

Background of the Invention
Field of the Invention:

This invention relates to controlling information displays. Specifically, it relates to displaying information that includes secure matter that cannot be subverted by the user of the display. Particularly, it relates to page printers on which security labels are to be printed in a manner that cannot be defeated by a casual user by cancelling or overprinting.

Description of Related Art:

Page printers can print data any place on the medium and the information to be printed is usually composed into a page or a portion of a page at a time, more than one line at time. This distinguishes the page printer from the line printer, the latter usually composing and printing the information serially one line at a time. The line printer is usually not capable of printing graphics except in a very constrained way. The characters printed occupy a fixed character space and are often only identified by a character code, the character being stored in a printer memory and retrieved using the character code. Details of page printers and the control of the information and printer functions are described in more detail in U.S. patent 4,651,278 incorporated herein by reference.

In some applications, it is desirable to print information that can be considered secure. For example, classification labels indicating that the information printed on a document is classified need to be printed but in a manner that cannot be subverted.

Subversion of security information might be accomplished by overprinting or by cancelling. To insure that the security information is properly printed, it is necessary to provide a nonsubvertible system that precludes the operator from interfering with or modifying the printing of certain information.

Summary of the Invention

In accordance with the invention, a display unit is supplied with information of the boundaries within which information is to be displayed. Additionally, an area within (or congruent to) the supplied boundaries is established wherein information can be displayed without restriction. Information can be displayed outside the inner area only in response to a special authorization indication.

One embodiment of a special authorization indication is for the information to be displayed outside the inner area to be contained in a security overlay.

Brief Description of the Drawing

The invention is described in detail by referring to the various figures which illustrate specific embodiments of the invention, and wherein like numerals refer to like elements.

FIG. 1 is an illustration of the areas on a display medium as referred to in the description of the invention.

FIG. 2 is a functional block diagram of a system for carrying out the invention in a printer environment.

FIG. 3 is an example of a DUA command.

FIG. 4 is a flowchart of a process according to the invention.

Description of the Preferred Embodiment

The following definitions are terms used in the explanation of the invention.

Pels, sometimes called pixels, are picture elements, usually dots, that make up a page of text or images or combinations thereof. In black and white printing, a pel having a value of 0 usually represents a white dot, i.e., absence of ink, and a pel having a value of 1 represents a black dot, i.e., a drop or dot of ink applied. Pel resolution refers to the number of dots per linear unit of square area, i.e., 240 pels means a square inch (6.5 square centimeters) divided into 240 rows of 240 pels each for a total of 57,600 individual pels per square inch.

The words printer and display are used interchangeably. The invention applies to display devices that compose the displayed information from a bit-mapped source, i.e., a source specifying the pel values at each point on the display. The following explanation is directed to the use of the invention in the page printer environment but is intended to include other display means such as CRT displays and the like.

The terms page printer and all-points-addressable printers are used interchangeably and refer to printers that can print anywhere on a valid printing area and where each dot or pel is individually controllable.

A physical page is the maximum area of the medium upon which the display is to be made.

The valid printing area (VPA) is the area on the physical page where information can be displayed. The VPA must be congruent to or within the physical page. In the following description of the invention, the VPA will be considered as congruent with the physical page, absent any reference to the contrary, with no loss of generality.

The user printing area (UPA) is the area on which all users including unauthorized users can display information. The UPA, to be useful, must be congruent to or within the VPA. The UPA is also referred to as the inner area.

The secure area is the VPA outside the UPA.

Security label is a generic term used to denote any type of text or graphics that is to be printed on one or more pages in a manner that it cannot be subverted by removal, overstriking, or modification. Alternatively, security can be maintained by providing error messages or audit data to be logged in the display driving device, usually a host computer. It is also possible to use a combination of both methods. Secure labelling is sometimes referred to as guaranteed labelling (or printing) by which the integrity of the label is maintained.

A casual user is intended to mean a user of a display system who is not authorized to display or to control displays in the secure area.

An authorized user is a user authorized to display or to control displays in the secure area. Authorization may be implied such as by issuing a DUA, infra, or expressed such as by use of a password.

Most computer systems, especially in an environment where secure printing is required, can be accessed only by users having a given identification code plus a related password. That is, a user initially gains access to the computer system by supplying, via some input device such as a keyboard, a uniquely assigned codeword. The computer checks whether the codeword has been assigned for that particular system. If not, the user is denied access immediately and usually a log entry is made by the computer of the attempt to access with an improper identification code.

If the computer finds the identification codeword has been assigned to the system, it will usually signal the user to enter a password which is checked in the same way. If the password is valid, the user is given access to the system. If invalid, a procedure similar to an incorrect identification code is followed.

The user, however, has an authorization level assigned to the access codes that preclude or permit the user to use certain commands. In the following description, the authorization level for casual users will not permit the control, modification, or cancellation of a DUA whereas that for the authorized user will permit a DUA to be controlled.

Overlays, including security overlays, are utilized in page printers for defining forms or other data that is to be printed but that remains constant from one page to another. In some printers, especially electrophotostatic or laser, overlays may be physical such as a transparent form that is transparent and transferred directly onto the photoconductor by a flash of light. The data is then printed within the form in the usual manner.

In page printers and all-points-addressable printers where the page is composed before printing, an overlay can be made electronically by mapping the overlay into the page. This is a useful and flexible process for printing data that is constant over many pages. Computer programs for generating overlays are commercially available, e.g., OGL (Overlay Generation Language) by IBM for use with machines supported by PSF (Print Service Facility). The example is a command language having an English-like structure that permits a user with little experience to generate an overlay. Security labels are usually the same from one page to the next and therefore can be utilized as overlays.

The overlays can be generated and stored ready for use. The authorization level of the user determines whether a particular security overlay can be retrieved and used.

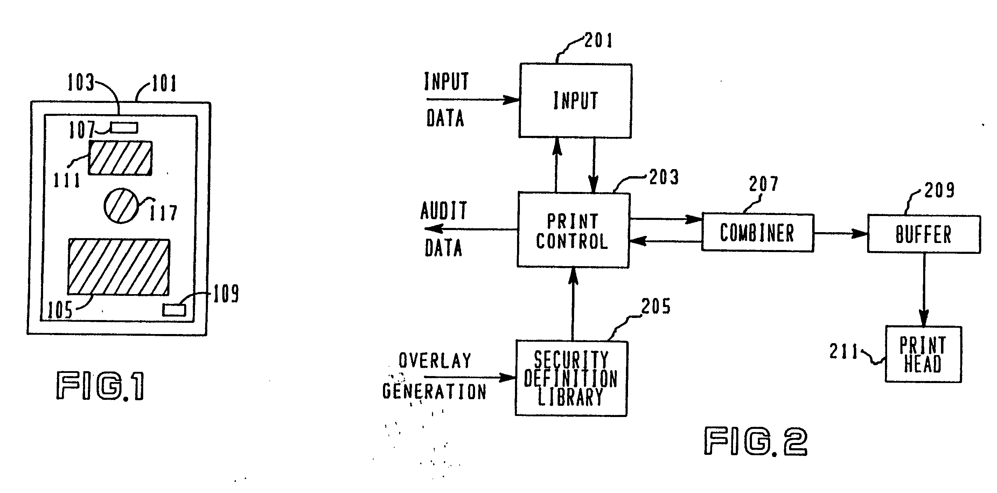

In Figure 1, the physical page 101 is the largest area of the display medium available. The VPA 103 is shown as being within the physical page but it may be congruent, i.e., be the same size as the physical page 101. The UPA can be a single area or several areas 105, 111, and 117, shown as shaded areas within the VPA 103. A pair of security labels 107 and 109 are shown in the margins within the VPA but outside the UPA.

When printing documents (or displaying information), some way of displaying or attaching a security label is sometimes desirable. The labelling should not be subvertible, i.e., the system operator (user) should not be able to remove or to change the label. The user should also not be able to overstrike or otherwise obliterate the security label.

The invention accomplishes the security label function that allows authorized users to print security labels on each page of printed output in the margins at the top, bottom, either side, or any combination of locations. The security labels can be text, graphics, or any combination of both. The labels are positioned using a special overlay and security resources are stored in special security libraries.

When the UPA is congruent with the VPA, all users can print anywhere within the boundaries of the VPA. To initiate security printing, a DUA (Define User Area) command is issued. The DUA command sets the boundaries of the UPA so that only an authorized user can print outside the UPA but within the VPA, that is, the secure area. Any user can print within the UPA.

The block diagram of Figure 2 shows the components of a system for practicing the invention. The input data, which includes both the information to be displayed and print control information, are supplied to an input unit 201, sometimes referred to as a spool or spooler and which is usually part of the host processor. The generated overlays are stored from the overlay generator (part of the host processor) in a security definition library storage 205, also commonly part of the host processor. The input unit 201 passes the input data to a print control unit 203 which interprets the commands and sends print control signals to the input unit 201. (The print control unit 203, usually part of the host processor, can be a commercially available program such as the Print Service Facility (PSF) from IBM Corporation.)

The command signals from the input unit 201 may cause the print control unit 203 to extract certain information from the security definition library 205. That information can include security overlays which provide special electronic forms for printing human-readable, nonsubvertible sensitivity labels. The print control unit 203 sends the overlays and data to be printed to a combiner 207. The combined information to be displayed is then sent to a buffer 209, usually part of the printer's control unit where the page is composed, either completely or at least partially before being sent to the display device, in this illustration a printer using a print head or, in some cases, an Image Generator Subsystem) 211.

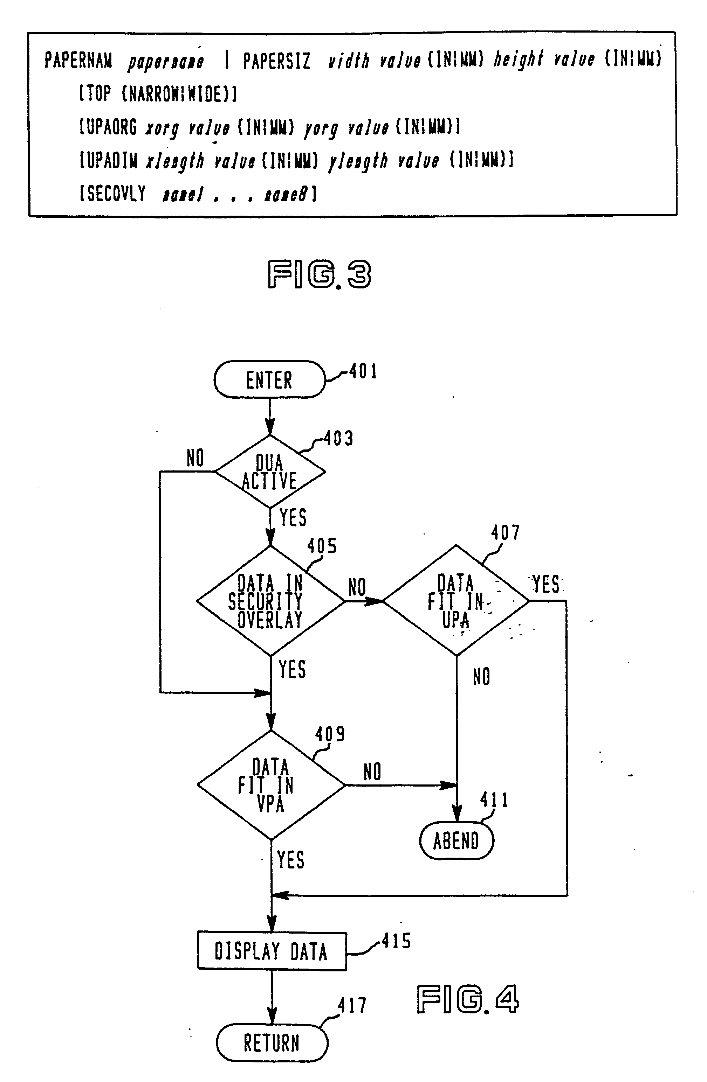

Figure 3 is an example of a command, called herein a DUA (Define User Area), that may be embedded in the input data sent to the input unit 201. Parameters of the display medium are specified. One parameter is the size of the paper which can be specified by a name, e.g., A4 which means 210 mm (millimeters) by 297 mm, or by actual size in millimeters (MM) or inches (IN). The format of the command uses a vertical line to indicate alternatives of the specified parameters such as IN or MM.

Another parameter specified is the direction of display on the medium, e.g., the direction of printing on a document. The parameter is identified as TOP in Figure 3 and the allowable parameter values are NARROW or WIDE. NARROW specifies the normal direction, also called portrait mode, with the top edge being the narrow dimension of the paper. WIDE specifies the sideways direction, also called landscape mode, with the top edge being the wide dimension of the paper or medium.

The dimensions of the UPA are specified by defining the x- and y-coordinates of an origin (UPAORG) in inches (IN) or millimeters (MM) measured from a predetermined origin of the paper or medium, usually the upper left corner. The space or area itself is then defined by offsets given as the xlength and ylength values, also in inches or millimeters. Alternatively, the area can be defined by a second pair of values that define the coordinates of the diagonally opposite corner of the area relative to the origin.

Another parameter is the name of the security overlays to be printed or displayed (SECOVLY). These can be specified by name as shown or using some other identification scheme such as the address of the overlay in the security definition library 205.

A DUA can identify multiple areas, e.g., as shown in Figure 1, in which case the DUA would include more than one UPAORG and more than one UPADIM, or whatever boundary designations are used. Shapes may also be designated by formulae such as the circular UPA 117 in Figure 1.

Multiple DUA's may be issued for several UPA's within a VPA with a restriction that mutually exclusive or contradictory entries and security labels do not appear in the common secure area. For example, all DUA's defining UPA's in the same VPA must have the same value for TOP or adopt a convention that the first, last, or other designated DUA in the sequence specifies the value to be used in case of contradictory specifications.

The procedure depicted in the flowchart of Figure 4 is preferably carried out within the combiner 207 of Figure 2. The procedure is commonly part of a larger control program and is shown as a subroutine having an entry point 401 and a terminal point 417 which specify the beginning of the procedure and the return to the larger control program, respectively.

Subroutines are computer program modules that do not appear in the sequence of program instructions where they are to be used. Subroutines are invoked by call and link procedures which cause the program execution to transfer to the module, i.e, subroutine instructions, and to link or to supply the operands used by the subroutine. When a subroutine has completed execution, program control returns to the instruction in the calling program following that which called the subroutine. The values of operands affected by the subroutine procedures have replaced the values that existed when the subroutine was called.

In the following description, references are made to the flowcharts depicting the sequence of operations performed by the program. The symbols used therein are standard flowchart symbols accepted by the American National Standards Institute and the International Standards Organization. In the explanation, an operation may be described as being performed by a particular block in the flowchart. This is to be interpreted as meaning that the operations referred to are performed by programming and executing a sequence of instructions that produces the result said to be performed by the described block. The actual instructions used depend on the particular hardware used to implement the invention. Different processors have different instruction sets but the person of ordinary skill in the art is familiar with the instruction set with which he works and can implement the operations set forth in the blocks of the flowchart.

The first step by the procedure in Figure 4 is to check whether a DUA command has been issued as shown in a decision block 403. This is simply accomplished by setting a flag when a DUA is received in the print control unit and then sensing the flag. If a DUA has not been issued, then a check is made by a decision block 409 to determine whether the data will fit in the VPA. If so, then the data is displayed by a process block 415. This sequence is the default sequence meaning that there are no nonsubvertible labels to be displayed and the only requirement is that the information to be displayed fit on the medium.

If a DUA has been issued as determined in the decision block 403, it indicates that nonsubvertible labels are to be printed and the information is checked by a decision block 405 to determine whether the data is in a security overlay. The fact that information is in a security overlay is an indication that the initiator had authorization to print in the VPA outside the UPA. If the data is in a security overlay, then the check is made by the decision block 409 to determine whether the information to be displayed will fit in the VPA.

If the data is not in a security overlay as determined by the decision block 405, then it must fit in the UPA. If the data does not fit in the UPA, either because it is targeted outside the UPA or because it doesn't fit within the UPA, then the program branches to an abnormal end (ABEND) as shown by the terminal block 411. If the information to be displayed fits in the UPA, then it can be displayed without checking whether it fits within the VPA since the UPA cannot be larger than the VPA.

The ABEND is also invoked whenever the decision block 409 determines that the information to be displayed does not fit in the VPA.

The ABEND is preferably a routine that checks the reason for the ABEND and supplies a message via the print control unit 205 (Figure 2) to the host machine or the source of the input data. When the decision blocks 407 and 409 determine an abnormal condition, a flag can be set, depending on the abnormal condition sensed. The ABEND routine can then use the set flag to ascertain which message is to be returned.

In Figure 2, the output signal from the print control unit 205 that corresponds to the message returned by the ABEND routine is shown as audit data.

While the invention has been particularly shown and described with reference to a preferred embodiment thereof, it will be understood by those skilled in the art that various changes and modifications in form and details may be made therein without departing from the spirit and scope of the invention according to the following claims.

## Claims

1. A method for printing secure data on a bounded medium comprising the steps of:
defining an area within said bounded medium;
displaying data within the defined area; and
inhibiting the display of data on the bounded medium outside the defined area except in response to authorization indicia.

2. The method claimed in claim 1 including the step of identifying secure formats contained in security overlays.

3. System for displaying data on a bounded medium, comprising:
first means for controlling the definition of an inner area within said bounded medium;
second means for controlling display of data on said bounded medium within said inner area; and,
third means for controlling the display of data on said bounded medium outside said inner area only in response to authorization indicia.

4. A method for printing secure data on a bounded medium, comprising the steps of:
supplying boundary values of a medium on which information is to be displayed;
establishing relative to said medium a user area at least within said supplied boundary values;
displaying without restriction information in said user area; and
permitting information to be displayed outside said user area and inside said supplied boundary values only in response to an authorization signal.

5. The method claimed in claim 1 or 4 including the additional step of providing an indication of an attempt to display information outside said user area in the absence of an authorization signal.

6. The method claimed in claim 4 or 5 wherein the step of supplying boundary values includes the step of defining parameters of the medium.

7. The method claimed in claim 6 including the further step of identifying security overlays containing the information to be displayed outside said user area.

8. Device for printing secure data on a bounded medium, comprising:

means for supplying boundary values of a medium on which information is to be displayed;

means for establishing relative to said medium a user area not outside said supplied boundary values;

means for displaying without restriction information in said user area; and

means for permitting information to be displayed outside said user area and inside said supplied boundary values only in response to an authorization signal.

9. The device claimed in claim 8 including means for providing an indication of an attempt to display information outside said user area in the absence of an authorization signal.

10. Device for printing secure data on a bounded medium, comprising:

first means for controlling the definition of boundaries on a medium within which information is to be displayed;

second means for controlling the establishment relative to said medium of a user area at least within the boundaries defined under control of said first means;

third means for controlling the display without restriction of information within the user area; and

fourth means for controlling display of information within the boundaries defined under control of said first means outside the user area only in response to an authorization signal.

11. Device for printing secure data on a bounded medium, comprising:

input means for receiving input data to be displayed and display commands;

display means for displaying said input data on a medium;

means for specifying a predetermined area on said medium;

means responsive to said input means and to said means for specifying for determining whether said input data will be displayed completely within said predetermined area; and

enabling means responsive to said means for determining and to said input means for causing said printer means to print the received input data if completely within said predetermined area and for causing said display means to display the input data if not completely within said predetermined area only if said input means has received a certain command.

12. The device claimed in claim 8 or 11 further comprising means for defining parameters of the medium.

13. The device claimed in claim 12 further comprising means for specifying security overlays containing information to be displayed outside said user area.

FIG.2

209 BUFFER

211 PRINT HEAD

207 COMBINER

203 PRINT CONTROL

201 INPUT

205 SECURITY DEFINITION LIBRARY

INPUT DATA

AUDIT DATA

OVERLAY GENERATION

FIG.1

101
103
107
111
117
105
109

```
PAPERNAM  papername  | PAPERSIZ  width value (IN|MM) height value (IN|MM)
    [TOP (NARROW|WIDE)]
    [UPAORG xorg value (IN|MM) yorg value (IN|MM)]
    [UPADIM xlength value (IN|MM) ylength value (IN|MM)]
    [SECOVLY name1 . . . name8]
```

## FIG.3

## FIG.4